# EUROPÄISCHE PATENTANMELDUNG

(11) **EP 3 037 731 A1**
(43) Veröffentlichungstag der Anmeldung: **29.06.2016**
(21) Anmeldenummer: 15002991.6
(22) Anmeldetag: 20.10.2015
(51) Int. Cl.: F24B 1/192, F24B 13/00

(54) **FEUERSTÄTTE**

(30) Priorität: 23.12.2014 DE 102014019064
(71) Anmelder: Spartherm Feuerungstechnik GmbH, 49324 Melle (DE)
(72) Erfinder: Rokossa, Gerhard Manfred, 49143 Bissendorf (DE)
(74) Vertreter: Pott, Ulrich

(57) **Zusammenfassung**

Die Erfindung bezieht sich auf eine Feuerstätte 1, insbesondere Kamin- oder Kachelofen, Kamineinsatz oder dergleichen Vorrichtung zur Verbrennung fester Brennstoffe wie Scheitzholz, Holzpresslinge wie Briketts oder Pellets oder mineralischer Brennstoffe wie Kohle oder Anthrazit, wobei der Brennraum 2 einen Höhenabstand zu Aufstellern der Feuerstätte 1 aufweist und eine Brennraumtür 3 mit einer im Querschnitt winklig zueinander ausgerichteten transparenten Türscheibe 3.1, 3.2 oder mit einer im Querschnitt abgerundeten transparenten Türscheibe vorgesehen ist, wobei der Brennraum 2 von der auf- und abbeweglichen Brennraumtür 3 verschließbar ist und die Brennraumtür 3 in einen oberen Öffnungsraum 9 überführbar ist, der zumindest bereichsweise in einer Höhenlage oberhalb des Brennraumes 2 gelegen ist. Um die Feuerstätte freizügig mit verschiedenen Brennraumtürgeometrien versehen zu können, diese jedoch auch noch reinigen zu können, ist vorgesehen, dass ein weiterer unterer Öffnungsraum 10 für die Brennraumtür 3 vorgesehen ist, in dem sich die Brennraumtür 3 in einer anderen Öffnungsstellung teilweise in einer Höhenlage unterhalb des Brennraumes 2 erstreckt, wobei die Brennraumtür 3 in dieser anderen Öffnungsstellung den Brennraumboden 3.3 nach oben hin überragt.

## Beschreibung

Die Erfindung bezieht sich auf eine Feuerstätte, insbesondere einen Kamin- oder Kachelofen, einen Kamineinsatz oder eine sonstige Vorrichtung zur Verbrennung fester Brennstoffe wie Scheitzholz, Holzpresslinge wie Briketts oder Pellets oder mineralischer Brennstoffe wie Kohle oder Anthrazit, wobei der Brennraum einen Höhenabstand zu Aufstellern der Feuerstätte aufweist und die Brennraumtür mit winklig zueinander ausgerichteten transparenten Scheiben mit einer abgerundeten transparenten Türscheibe versehen ist, wobei der Brennraum von der auf- und abbeweglichen Brennraumtür verschließbar ist und die die Brennraumtür in einen Öffnungsraum überführbar ist, der zumindest bereichsweise in einer Höhenlage oberhalb des Brennraumes gelegen ist.

Mit Biomasse und mithin vorwiegend mit Holz betriebene Feuerstätten leisten einen großen Beitrag zur Nutzung regenerativer Energien. Aus diesem Grund und auch wegen der damit einhergehenden Verbesserung der Wärmeversorgungssicherheiten in Privathaushalten erfreuen sich diese Feuerstätten zunehmender Beliebtheit.

In vielen Fällen wird dabei besonderer Wert auf ein gut sichtbares Feuer gelegt. Um das Flammenspiel gut sichtbar zu machen, wird angestrebt, derartige Feuerstätten wie Heizkamine oder Kaminöfen mit einem großen Sichtfenster in der Brennraumtür auszustatten.

In zunehmendem Maße sind Feuerstätten beliebt, die in einen Wohnraum hineinragen mit Sichtfenstern in der Feuerungstür, die von unterschiedlichen Stellen eines Wohnraumes einsehbar sind. Dazu gibt es Brennraumtüren mit U-förmigem Querschnitt, mit L-förmigem Querschnitt, aber auch mit gerundetem Querschnitt, die somit auch ein Kreissegment im Querschnitt darstellen. In der Regel sind diese zum Öffnen der Brennraumtür nach oben zu bewegen in einen Öffnungsraum, der sich - bezogen auf eine Vertikalebene - vor dem Brennraum und zum überwiegenden Teil sich auch oberhalb des Brennraumes erstreckt. Da je nach Qualität des verwendeten Holzmaterials die Innenflächen von Scheiben einer derartigen Brennraumtür verrußen, ist es außerordentlich schwierig, diese zu reinigen, da insbesondere bei großen Sichtflächen bei hochgeschobener Brennraumtür weit an die Innenfläche der Sichtflächen herangereicht werden muss, um die Reinigungsarbeiten durchzuführen, was ohne Sichtkontrolle zu erfolgen hat. Dies ist nachteilig.

Es ist Aufgabe der vorliegenden Erfindung, eine Feuerstätte der eingangs genannten Art zu schaffen, bei der die Brennraumtür von ihrem Querschnitt her freizügig zu gestalten ist, bei der sich jedoch die Reinigungsarbeiten wesentlich vereinfacht darstellen lassen.

Zur Lösung dieser Aufgabe zeichnet sich die Feuerstätte der eingangs genannten Art durch die im Patentanspruch 1 angegebenen Merkmale aus.

Damit ist eine Feuerstätte geschaffen, bei der freizügig gestaltete, auf- und abbewegliche Brennraumtüren Verwendung finden können. Die Brennraumtür kann in zwei Öffnungsräume bewegt werden, nämlich zum einen in einen oberen Öffnungsraum und zum anderen in den unteren Öffnungsraum, wobei z.B. zu Reinigungszwecken ein unterer Bereich der Brennraumtür sorgfältig bei Sichtkontrolle gereinigt werden kann, wenn die Brennraumtür teilweise in dem oberen Öffnungsraum gelegen ist und mithin vom Brennraum her der untere Bereich der Brennraumtür zugänglich ist. Umgekehrt kann die Brennraumtür teilweise in den unteren Öffnungsraum bewegt werden, um den oberen Bereich einer Brennraumtür bei Sichtkontrolle zu reinigen.

Damit ist es möglich, freizügig Brennraumtürgeometrien verwenden zu können und trotzdem die erforderliche Pflege der Feuerstätte und mithin auch Reinigungsarbeiten für transparente Scheiben von Brennraumtüren durchführen zu können. So ist es beispielsweise ohne Weiteres möglich, im Querschnitt U-förmige, L-förmige, kreissegmentförmige Brennraumtüren bis hin zu im Querschnitt kreisrunden, säulenartigen Brennraumtüren zu verwenden.

Um in der Schließstellung der Brennraumtür den Brennraum durch die Brennraumtür vollständig abgedichtet vorgesehen zu haben, ist dabei nach einer bevorzugten Ausbildung der Feuerstätte vorgesehen, dass die entsprechende Brennraumtür und die Türscheiben zusätzlich auf ein Dichtelement oder falls erforderlich, mehrere Dichtelemente zubewegt werden können, die sich in einem Bereich des Brennraumes erstrecken, der zu den Türscheiben hin ausgerichtet ist. Dies ist in aller Regel ein Kantenbereich, wobei bei U-förmiger Ausbildung der Brennraumtür drei Dichtelemente, bei L-förmiger Gestaltung der Brennraumtür zwei Dichtelemente oder bei Rundgestaltung einer Brennraumtür ein Dichtelement oder mehrere, zur kreisrunden Form zusammengesetzte Dichtelementen vorgesehen sein können.

Bevorzugtermaßen ist es so, dass die jeweiligen Türscheiben und die Brennraumtür in der Endschließstellung eine Bewegung auf ein Dichtelement durchmachen können bzw. bei Initiierung einer Öffnungsbewegung eine Bewegung von dem Dichtelement weg. Dabei können Dichtelemente so gelegen sein, dass sie sich in einem Schacht bzw. Kanal befinden, der zu dem unteren und/oder dem oberen Öffnungsraum hin weist, so dass durch eine äußere Verkleidung der Feuerstätte dieser Kanal und mithin das Dichtelement abgedeckt werden können, so dass sich eine Türscheibe rahmenlos an das Dichtelement anschließen kann. Damit ist es auch möglich, beispielsweise eine U-, L-förmige oder runde Türgestaltung vorzusehen, die im Sichtbereich des Brennraumes rahmenlos ausgebildet ist und mit dem Feuerstättekorpus zugewandten Bereichen, in aller Regel dem Feuerstättekorpus zugewandten hinteren Stirnkantenbereichen über Befestigungselemente mit Schienenführungen verbunden sind, durch die sonstigen Teile des Feuerstättekorpus im montierten und damit aufgestellten Zustand des Feuerstättekorpus abgedeckt sind.

Aufgrund des Höhenabstandes des Brennraumes zu den Aufstellern des Möbelkorpus ist ein hinreichender Raum vorhanden, um den unteren Öffnungsraum zur Verfügung zu stellen. Hintere Längsführungen können mit herkömmlichen Mitteln versehen sein, beispielsweise mit Laufrollen, mit Kipphebeln, Vertiefungen und dergleichen, um die Bewegungen von Türscheiben bzw. der Brennraumtür auf die Dichtungen zu und von diesen weg derart zu bewerkstelligen, dass eine hinreichende Dichtheit der Feuerstätte in der Schließstellung der Brennraumtür vorgesehen und realisiert ist.

Um die Bewegung durchzuführen, insbesondere auch bei einer U-förmigen Gestaltung der Brennraumtür ohne einen Rahmen, ist es auch im Rahmen der Erfindung möglich, die Scheiben bzw. die Brennraumtür insgesamt mit einer gewissen Elastizität auszubilden, um die Brennraumtür einerseits vom Brennraum weg nach vorne in einen Kanal oder einen Schlitz zu bewegen, der sich jeweils zum unteren Öffnungsraum oder zum oberen Öffnungsraum öffnet. Andererseits kann durch dieses elastische Aufbiegen erreicht werden, dass bei der Betätigung der Brennraum für nicht nur eine hintere Dichtung entlastet wird, sondern auch seitliche, längs von seitlichen Türschenkeln der Brennraumtür vorgesehene Dichtungen. Auch in Verbindungsbereiche, beispielsweise Klebebereichen zwischen einer vorderen Sichtfläche und seitlichen Sichtflächen der Brennraumtür lassen sich in einem gewissen Maße aufbiegen, so dass die Weg- und Heranbewegung an das Dichtelement realisiert werden kann.

Weitere Einzelheiten und Vorteile der Erfindung ergeben sich aus weiteren Unteransprüchen, der nachfolgenden Beschreibung und der Zeichnung. In der Zeichnung zeigen:
- Fig. 1: in einer Seitenansicht ausschnittsweise eine Feuerstätte nach der Erfindung mit einer transparenten, im Querschnitt U-förmigen Brennraumtür in der Schließstellung;
- Fig. 2: das Ausführungsbeispiel nach Fig. 1 in der Öffnungsstellung der Brennraumtür in deren in den unteren Öffnungsraum abgesenkter Öffnungsstellung, und
- Fig. 3: das Ausführungsbeispiel nach den Fig. 1 und 2 bei in den oberen Öffnungsraum hochbewegter Brennraumtür in dieser Öffnungsstellung.

In der Zeichnung sind grundsätzlich übereinstimmende Teile mit übereinstimmenden Bezugsziffern versehen.

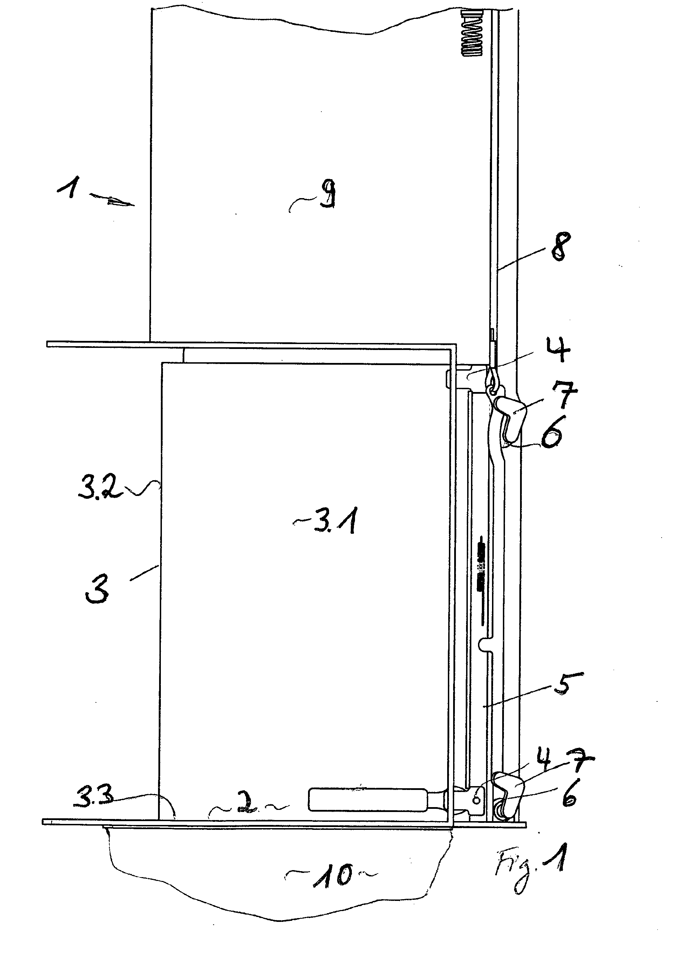

In Fig. 1 ist ausschnittsweise ein Ausführungsbeispiel einer Feuerstätte in Gestalt eines Kaminofens 1 dargestellt. Dieser hat einen Brennraum 2, der von drei Seiten her einsehbar ist und mithin eine im Querschnitt im Wesentlichen U-förmige Brennraumtür 3, die insgesamt drei Scheiben aufweist, nämlich zwei Seitenscheiben 3.1 und eine vordere Vorderscheibe 3.2. Diese Scheiben 3.1 und 3.2 sind beispielsweise miteinander verklebt oder einteilig gewinkelte Türglasscheiben und mithin mit Ausnahme von hinteren Befestigungselementen 4, die in Führungsschienen 5 aufund abbeweglich geführt sind, rahmenlos ausgebildet. Die Führungsschienen 5, die Befestigungselemente 4, Laufrollen 6, Kipphebel 7 und auch ein Zugseil 8 sind im montierten Zustand der Teile nicht mehr im Einzelnen sichtbar, da sie abgedeckt sind, so dass damit eine Feuerstätte 1 zur Verfügung gestellt ist, bei der der Blick in den Brennraum 2 ungehindert erfolgen kann.

In Fig. 1 ist die Feuerstätte 1 gezeigt bei geschlossener Brennraumtür 3. Im Einzelnen nicht näher sichtbar dargestellt, aber angedeutet, ist ein oberer Öffnungsraum 9 und ein unterer Öffnungsraum 10. Der untere Öffnungsraum 10 ist dadurch erhalten, da der Brennraum 2 einen Höhenabstand zu Aufstellern der Feuerstätte 1 aufweist, über die die Feuerstätte auf dem Erdboden bzw. dem Boden eines Wohnhauses abzustellen ist.

Im Einzelnen nicht näher dargestellt sind Dichtelemente vorhanden, die die Brennraumtür 3 in ihrer Schließstellung gemäß Fig. 1 abdichten. Des Weiteren kann es so sein, dass der Brennraum 2 mit einer Brennraumwanne versehen ist, die sich wannenförmig nach unten zum unteren Öffnungsraum 10 her ausgerichtet erstreckt. Diese kann auch so angeordnet sein, dass zum Öffnungsraum 10 hin ein Schlitz bzw. zusätzlich ein Schacht oder ein Schlitzschacht oder ein Schlitzkanal vorgesehen ist, der der U-förmigen Kontur der Brennraumtür 3 folgt, und zwar dergestalt, dass mit Höhenabstand nach unten eine Kante z.B. der Brennraumwanne des Brennraumes 2 in den Kanal nach unten hin versetzt angeordnet ist, in der das auch U-förmige Dichtelement angeordnet ist; wobei noch hinreichend Platz verbleibt, dass die Brennraumtür 3 bei einem Überführen der Brennraumtür 3 in den oberen Öffnungsraum 9 oder den unteren Öffnungsraum 10 zunächst in der Zeichnung nach links und zusätzlich in die Zeichnung nach vorn und nach hinten bewegt werden, also ein gewisses Öffnungsbewegungsmaß innerhalb des Schachtes in Richtung auf den Schachtschlitz überwindet, dabei von der Dichtung abhebt und dann in den oberen Öffnungsraum 9 oder den unteren Öffnungsraum 10 bewegt werden kann.

Durch die nach unten hin versetzte Anordnung des Dichtelementes ist mithin der Blick auch ungetrübt in den Brennraum möglich, da die Brennraumtür nach unten in den Schacht hineinragt und dort an der Dichtung anliegt.

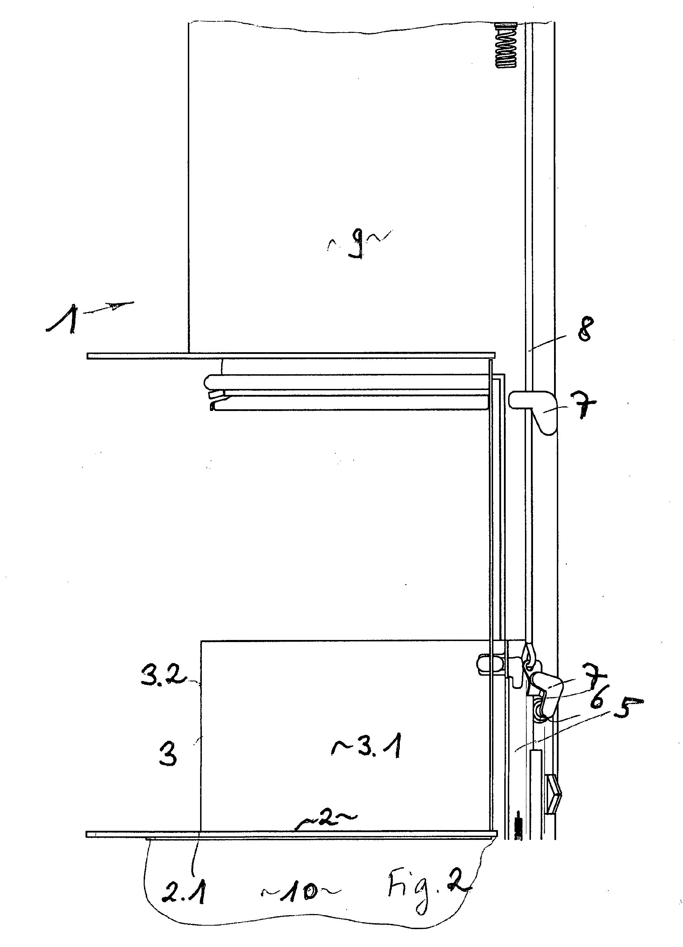

In Fig. 2 ist das Ausführungsbeispiel nach Fig. 1 gezeigt (ausschnittsweise), wobei auf eine vollständige Darstellung des unteren Öffnungsraumes 10 der besseren Übersichtlichkeit halber verzichtet wurde.

Die Brennraumtür 3 überragt das Sichtniveau 2.1 des Brennraumes 2 deutlich nach oben hin, so dass die transparenten Türscheiben 3.1 und 3.2 ohne Mühen von oben her gereinigt werden können.

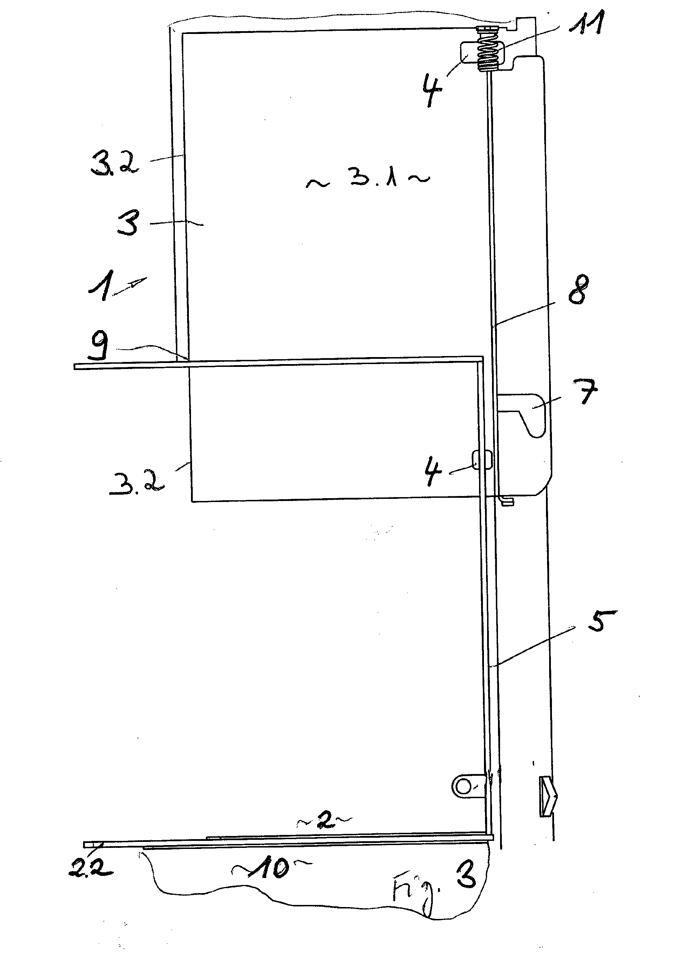

In Fig. 3 liegt die Brennraumtür 3 am oberen Puffer 11 an, so dass die Brennraumtür 3 im Wesentlichen im oberen Öffnungsraum 9 gelegen ist, gleichwohl aber noch von unten her zugänglich ist, so dass die Innenflächen der Brennraumtür 3 von unten her zugänglich und mit Sichtkontrolle von unten gereinigt werden können.

## Patentansprüche

1. Feuerstätte (1), insbesondere Kamin- oder Kachelofen, Kamineinsatz oder dergleichen Vorrichtung zur Verbrennung fester Brennstoffe wie Scheitzholz, Holzpresslinge wie Briketts oder Pellets oder mineralischer Brennstoffe wie Kohle oder Anthrazit, wobei der Brennraum (2) einen Höhenabstand zu Aufstellern der Feuerstätte (1) aufweist und eine Brennraumtür (3) mit einer im Querschnitt winklig zueinander ausgerichteten transparenten Türscheibe (3.1, 3.2) oder mit einer im Querschnitt abgerundeten transparenten Türscheibe vorgesehen ist, wobei der Brennraum (2) von der auf- und abbeweglichen Brennraumtür (3) verschließbar ist und die Brennraumtür (3) in einen oberen Öffnungsraum (9) überführbar ist, der zumindest bereichsweise in einer Höhenlage oberhalb des Brennraumes (2) gelegen ist, **dadurch gekennzeichnet, dass** ein weiterer unterer Öffnungsraum (10) für die Brennraumtür (3) vorgesehen ist, in dem sich die Brennraumtür (3) in einer anderen Öffnungsstellung teilweise in einer Höhenlage unterhalb des Brennraumes erstreckt, wobei die Brennraumtür (3) in dieser anderen Öffnungsstellung den Brennraumboden (3.3) nach oben hin überragt.

2. Feuerstätte (1) nach Anspruch 1, **dadurch gekennzeichnet, dass** der Brennraum (2) zumindest ein den Türscheiben (3.1, 3.2) oder der Türscheibe (3.1, 3.2) der Brennraumtür (3) zugeordnetes Dichtelement aufweist, an das die Brennraumtür (3) im Verlaufe ihrer Schließstellung heranbewegbar ist zur Abdichtung des Brennraumes (2) in der Schließstellung durch die Brennraumtür (3) und von der die Brennraumtür (3) bei Überführung in eine auf- oder abbewegliche Öffnungsstellung wegbewegbar ist.

3. Feuerstätte (1) nach Anspruch 1 oder 2, **dadurch gekennzeichnet, dass** die Brennraumtür (3) an beweglichen Befestigungselementen (4) abgestützt ist, die in Führungsschienen (5) beweglich geführt sind mit einer Führungsfläche zur Überführung der Brennraumtür (3) in den oberen (9) und unteren (10) Öffnungsraum, wobei die Führungsflächen Vertiefungen aufweisen, in die Führungselemente (6, 7) eingreifen zwecks Heranbewegen der Brennraumtür (3) an das zumindest eine Dichtelement in der Schließstellung der Brennraumtür (3).

4. Feuerstätte (1) nach einem der vorangehenden Ansprüche, **dadurch gekennzeichnet, dass** in zumindest einer Vertikalebene vor dem Brennraum (2) zumindest eine Schlitzöffnung vorgesehen ist, die mit dem oberen und/oder dem unteren Öffnungsraum (9, 10) verbunden ist.

5. Feuerstätte (1) nach einem der vorangehenden Ansprüche, **dadurch gekennzeichnet, dass** die Brennraumtür (3) in Bereichen außerhalb der Befestigungselemente (4) zur Verbindung der Brennraumtür (3) mit den Führungsschienen (5) rahmenlos ausgebildet ist.

6. Feuerstätte (1) nach einem der vorangehenden Ansprüche, **dadurch gekennzeichnet, dass** die Brennraumtür (3) bereichsweise elastisch ausgebildet ist.

7. Feuerstätte (1) nach einem der Ansprüche 3 bis 6, **dadurch gekennzeichnet, dass** der Brennraum (3) über Rollen (6) und Kipphebel (7) in den Führungsschienen (5) geführt ist.

8. Feuerstätte (1) nach einem der vorangehenden Ansprüche, **dadurch gekennzeichnet, dass** die Brennraumtür (3) ein im Wesentlichen U-förmiges oder L-förmiges Querschnittsprofil aufweist.

9. Feuerstätte nach Anspruch 8, **dadurch gekennzeichnet, dass** die Brennraumtür (3) zumindest zwei rechtwinklig aufeinander ausgerichteten transparenten Scheiben (3.1, 3.2) aufweist, die miteinander verklebt sind.

10. Feuerstätte (1) nach einem der vorangehenden Ansprüche, **dadurch gekennzeichnet, dass** der Brennraum (2) eine Brennraumwanne aufweist mit zumindest einer die Brennraumwanne zumindest bereichsweise begrenzenden Brennraumkante hat, an der das Dichtelement vorgesehen ist, wobei im geöffneten Zustand der Brennraumtür (3) die Brennraumtür (3) die Brennraumwanne nach oben überragt.

11. Feuerstätte (1) nach einem der Ansprüche 1 bis 10, **dadurch gekennzeichnet, dass** das zumindest dem unteren Öffnungsraum (10) benachbarte Dichtelement in einem Schacht gegenüber einer sichtbaren Kante des Brennraumbodens (3.3) versenkt vorgeordnet ist und die Brennraumtür (3) in ihrer Schließstellung in diesen Schacht hineinragt.
